# EUROPEAN PATENT APPLICATION

(11) **EP 4 385 897 A1**
(43) Date of publication of application: **19.06.2024**
(21) Application number: 22212688.0
(22) Date of filing: 12.12.2022
(51) Int. Cl.: B64D 11/06

(54) **FOLDABLE CREW REST ASSEMBLY**

(71) Applicant: Airbus Operations GmbH, 21129 Hamburg (DE)
(72) Inventor: Muin, Andrew, 21129 Hamburg (DE); Sontag, Stephan, 21129 Hamburg (DE)

(57) **Abstract**

The present disclosure relates to a crew rest assembly (100) deployable on a row of passenger seats (50) of an aircraft. The assembly comprises a foldable mattress (130), and a foldable tent (140) configured to be attached to the mattress and sized to cover the mattress. The mattress is configured to be placed on seat cushions (51) of the row of passenger seats, and has at least one leg (120) that can pivot from a stored position at a bottom of the mattress into a deployed position, in which the at least one leg is arranged along the row of passenger seats.

## Description

The present disclosure generally relates to a crew rest for an aircraft. Specifically, the present disclosure relates to a crew rest to be placed on a row of passenger seats, which includes a foldable mattress and a foldable tent. The mattress has at least one pivotable leg, which is arranged, in a deployed position, along the row of passenger seats.

On long haul flights crew members have to take breaks. In order to rest during such breaks, some aircraft provide a crew rest bed or bunk, for example, on a lower deck of the aircraft. Some aircrafts were not intended for long haul flights, so that they were not equipped with crew rest beds. In such cases, crew members try to rest in a row of passenger seats, simply by upfolding the arm rests between the seats and using the seat row as a bed.

However, this is not only uncomfortable, but there is also no privacy for the crew members as they lie between passengers of the aircraft. To improve the situation, some crew members use blankets to span between back rests of adjacent seat rows to cover the "bed".

It is therefore an object of the present disclosure to provide a simple possibility for crew members to rest.

This object is solved by the present invention as defined in the independent claims. Preferred embodiments are defined by the dependent claims.

According to a first aspect to better understand the present disclosure, a crew rest assembly deployable on a row of passenger seats of an aircraft comprises a foldable mattress and a foldable tent. The tent is configured to be attached to the mattress and sized to cover the mattress. The mattress is configured to be placed on seat cushions of the row of passenger seats, and has at least one leg that can pivot from a stored position at a bottom of the mattress into a deployed position, in which the at least one leg is arranged along the row of passenger seats.

The at least one leg allows the provision of a mattress that is wider (contemplated in a direction perpendicular to the orientation of the row of passenger seats, e.g. in a longitudinal direction of the aircraft) and, hence, is more comfortable to lie on. In other words the mattress can be wider (can have a width larger) than the depth of a seat cushion of the passenger seats in the row of passenger seats. For example, the mattress can have a width equal to or smaller than a gap between a surface of a backrest of a seat of the row of passenger seats (the surface on which a passenger usually leans) and a rear surface of a seat in front of the seat row. Such gap usually has a standardised size, for example, approximately 60 cm to 75 cm, depending on the set distance between seat rows and the thickness of the backrest. [Bitte prüfen, Maße sind geschätzt. War wohl missverständlich formuliert; hier geht es um die Abstandsmaße zwischen Rückseite der Rückenlehne des Vordersitzes und Vorderseite der Rückenlehne des aktuellen Sitzes.]

The mattress, hence, can partially be located in an empty space in front of the seat cushion of the row of passenger seats, where passengers usually have their knees, lower legs and feet. The at least one leg of the crew rest assembly, when in the deployed position, is located in this empty space and supports at least the "overlapping" portion of the mattress (i.e., the portion of the mattress not lying on the seat cushion of the row of passenger seats). Thus, the mattress can have a comfortable width and provides a stable support for the crew member lying thereon.

The at least one leg is arranged along the row of passenger seats means, for example, that the at least one leg has a form that extends in a plane arranged along the longitudinal direction of the row of passenger seats, i.e. the longitudinal direction of the mattress, or a plurality of one-dimensional legs are arranged in one or more planes arranged along the longitudinal direction of the row of passenger seats.

Since the mattress and the tent are foldable, they each have a small packing size, so that they can be easily stored in the aircraft. For example, the mattress may be provided with at least one fold line in a widthwise direction, so that the length of the mattress is shortened by folding the mattress.

In an implementation variant, the mattress can include a plate-like member providing sufficient stiffness to maintain a horizontal position on the seat cushions as well as above the free space in front of the seat cushions. For example, the plate-like member can be a rigid foam, a multi-wall sheet, a fibre reinforced plate or the like. The mattress can further include soft foam on a surface, on which the crew member lies.

In another implementation variant, the mattress can comprise at least one fastening means configured to be attached to a seatbelt of at least one passenger seat of the row of passenger seats. The at least one fastening means can be arranged at a side of the mattress that will lie on a portion of the seat cushion close to a backrest of the seat of the row of passenger seats, since the seatbelt of the passenger seat is usually located in this area.

As a mere example, the at least one fastening means can be a loop or strap arranged at a bottom side or lateral side of the mattress. The seatbelt of the passenger seat can be threaded through the loop or strap and closed as usual, thereby holding the mattress close to the seat cushion. It is to be understood that the mattress can include a plurality of fastening means, for example, a number of fastening means equal to the number of seats of the row of passenger seats, i.e. equal to the number of available seatbelts.

In another example, the at least one fastening means can include a latch and/or buckle and/or belt, which matches the latch or buckle of the seatbelt of the aircraft passenger seats. Furthermore, in case the at least one fastening means includes a belt, such belt may be provided with a standardised belt mount, so that a passenger seatbelt of the passenger seat can be removed from its attachment point between the passenger seat and the belt of the mattress is attached thereto (e.g., hooked to the attachment point). In any case, the mattress can be secured in an easy manner.

In yet another variant, the assembly can further comprise a security belt. Such security belt can be arranged to hold a person lying on the mattress, in order to avoid injury, for example, during turbulences. For instance, the security belt can be connected to and/or integrated with the mattress. The security belt can be arranged, so that it spans in a widthwise direction of the mattress. An arrangement of the security belt in a middle of the mattress (contemplated in the longitudinal direction of the mattress) facilitates securing a person at a hip or pelvis of the person The belt can include a latch and buckle as a "normal" seatbelt of an aircraft passenger seat.

As a mere example, the tent can comprise an opening, through which the security belt enters an interior space of the tent. Specifically, the tent can comprise two openings or a number of openings corresponding to the number of seatbelt portions. The position of such through hole can correspond to the anchor point of the seatbelt (portion) at the mattress, when the tent is arranged on the mattress. Through such opening the seatbelt can be guided into the interior space of the tent, so that a person in the tent can securely use the seatbelt.

In a further variant, the mattress can include a recess configured to receive the at least one leg. Such recess is arranged at a bottom side of the mattress, i.e. a side that lies on the seat cushion of the row of passenger seats or faces the floor of an aircraft cabin. This allows storing the at least one leg inside of the mattress, so that the packing size of the mattress, when folded, is minimised. For instance, the depth of the recess can correspond to (can be equal or slightly larger than) a thickness of the respective leg. It is to be understood that preferably the recess has a form corresponding to the respective leg, so that the remainder of the mattress can be optimised for resting comfort.

As a mere example, the mattress can comprise a locking mechanism holding the at least one leg in the recess. Such locking mechanism can be a simple rotatable latch that can be positioned over the recess or free the at least one a leg in the recess. Alternatively or additionally, the locking mechanism can include a clamp or clip, for example, arranged in the recess, into which the respective leg can be pushed.

In yet a further variant, the at least one leg can comprise an extendable portion. For example, if the leg is brought into the deployed position, the extendable portion extends a length or height of the leg, in order to reach the floor of the aircraft cabin. Thus, the size of the leg (and optionally a recess in the mattress) can be minimised. In addition, the size (height) of the leg can be adapted to the passenger seat, such as different heights of different seats between a top surface of the seat cushion and the floor of the passenger cabin. This allows adaptation of the crew rest assembly to any passenger seat in different aircrafts.

In another variant, the at least one leg has a U-shape or V-shape, wherein the at least one leg is pivotally connected to the mattress at each end of the U-shape or V-shape. When in the deployed position, the at least one leg is arranged in the plane along (parallel to) the row of passenger seats.

Alternatively, the at least one leg is a rod- or pole-shaped element pivotally mounted to a bottom side of the mattress. Such a form of the at least one leg allows easier adaptation of the length of each of the at least one leg along the longitudinal direction of the mattress, so that an equal height of all portions of the mattress can be achieved. On the other hand, a U-shaped or V-shaped leg allows a smaller number of legs for the entire mattress, which allows faster installation of the mattress on the row of passenger seats.

It is to be understood that the mattress can comprise a plurality of legs having one or both of the described forms. In addition, the plurality of legs may be arranged along two or more planes along the row of passenger seats, which increases stability of the mattress due to a wider support area.

In a variant, the mattress can comprise at least one attachment means configured to be connected to the tent. This allows separate storage of the mattress and the tent, and also a secure arrangement of the tent on the mattress. In other words, attaching the tent to the mattress prevents the tent from moving off the mattress.

As a mere example, the at least one attachment means can include a hook-and-loop fastener, wherein one part of the fastener is attached to the mattress and the other part is attached to the tent. This allows faster installation, since the tent may simply be laid on the mattress.

Additionally or alternatively, the at least one attachment means can include a snap fastener, wherein one part of the fastener is attached to the mattress and the other part is attached to the tent. This allows a secure connection between tent and mattress.

In another variant, the tent can comprise a plurality of flexible frames holding a skin in a tunnel shape. The flexible frames can have a closed loop form forming the tunnel shape. This allows a very stable structure for the tent, although a portion of the frame may run across the mattress, so that a crew member may lie thereon. In order to avoid an uncomfortable arrangement of the frames, the mattress may include a recess sized to receive the portion of the frame running over the mattress.

Alternatively, the flexible frames can have a U-shape or omega-shape, wherein the open portion of the U-shape or omega-shape points towards the mattress. Since such shape may be less stable compared to a closed loop frame, the mattress may be equipped with an opening or sleeve, into which a free end of the frame can be inserted. This may increase the time for setting up the crew rest assembly, but increases comfort due to the omission of any frame portion running over the mattress.

Alternatively or additionally, the skin can be tunnel-shaped with a closed loop cross-section or with an open cross-section. Thus, the skin can form a complete tunnel, wherein a portion of the skin lies on the mattress, or can be U-shaped or omega-shaped. In case of the complete tunnel, the tent may be placed on the mattress in any rotational position, which allows a fast installation of the crew rest assembly. The U-shaped or omega-shaped tent can increase comfort, since the crew member can lie on the mattress and not the skin. It is to be understood that the tunnel shape can have any cross-sectional form. As a mere example, the tunnel may have a rectangular cross-section, a round or elliptical cross-section or a U shaped or omega-shaped cross-section.

As a mere example, each of the frames can be arranged at the outer circumference of a cross-section of the tunnel-shaped skin. For instance, the frames can be arranged vertically, i.e. the frame is arranged in a vertical plane. Alternatively, at least one of the frames can be arranged at an angle, so that it provides increased stability in a longitudinal direction of the tunnel shape. It is to be understood that a vertically arranged frame has the smallest size, so that the packing size of the tent can be minimised. In case of a frame arranged at an angle, such frame may be equipped with a joint, so that the packing size of the tent can be reduced.

In yet another variant, each of the plurality of flexible frames can include at least one biasing element forcing the respective flexible frame in a position forming the tunnel shape. For example, each frame can be composed of a plurality of frame sections, that are connected to one another by a biasing element. Such biasing element can form a corner or bend of the frame. This allows a small packing size of the tent and also a self-erecting frame.

Furthermore, the biasing element allows flexibility of the frame in a cross-section of the tent. This may be advantageous in case of an emergency, where the back rest of the seat, on which the assembly is arranged, can be folded down towards the seat cushion of the seat (if no crew member lies in the tent). The frame with the biasing element just gives way for the back rest to be folded down due to the flexibility of the frame and biasing element.

In a further variant, the frame is made of a flexible plastic, such as fibre reinforced plastic. Alternatively, the frame may also be made of an elastic metal or combinations thereof. Such elastic frame further allows easier access into an interior space of the tent, since the frames may be deformed in their cross-section. For instance, the upper portion of the frame may be lifted, in order to increase a height of the cross-section of the frame for easier entry into the tunnel.

In a variant, the skin can comprise at least one portion, which is partially transparent from an interior space of the tent to an exterior space of the tent. This allows a crew member lying inside of the tent to see what is going on outside of the tent. Specifically, the crew member can see passengers, other crew members and/or information signs (e.g., a fast seatbelt sign in a personal service unit above the row of passenger seats). The partially transparent material does not allow to see anything inside of the tent from outside of the tent, so that the privacy of the crew member is preserved. In other words, from the outside the skin is opaque. For example, a fine meshed fabric with a printed layer on the outside can be used as the skin.

Additionally or alternatively, the skin can be of a breathable material (i.e., air permeable material). This allows a comfortable temperature and fresh air inside of the tent.

Also additionally or alternatively, the skin can have a closable opening, through which a person can enter and leave an interior space of the tent. For example, at an end of the tunnel-shaped skin, the skin may form a flap that can be opened and closed. The closing of the flap can be achieved by a hook-and-loop fastener, a zipper, snap fasteners or the like.

Additionally or alternatively, the closable opening and flap may be arranged at a lateral side and/or upper side and/or longitudinal end of the tunnel-shaped skin. This allows a larger opening for easy access to the interior space of the tent.

Further additionally or alternatively, the skin can have at least one upper portion that is releasably attached to a remainder of the tent. In other words, the tent may be provided with a lid-like skin portion. Such portion may be attached to the remainder of the tent by a hook-and-loop fastener, a zipper, snap fasteners or the like. This allows a crew member to sit up and reach through the open upper portion. For instance, in case of an emergency, the crew member can easily reach an oxygen mask above the row of passenger seats, and/or the crew member can open a fresh air nozzle of a personal service unit above the row of passenger seats.

Also additionally or alternatively, the skin can be provided with a window, for example, in an upper portion of the skin. This allows a crew member lying in the tent to look to the outside, for example, another crew member and/or information sign. Likewise, another crew member can look inside, in order to check whether the resting crew member is fine. For maintaining privacy, the window may be closable by a flap of non-transparent or semi-transparent skin.

Still additionally or alternatively, the skin can have a size, so that the tunnel shape has a height smaller or equal to a height of an upright back rest of the row of passenger seats. Likewise, the frames can have a form and size, so that no portion of the frames extent higher than an upright back rest of the row of passenger seats. This avoids any obstructive element to be arranged in a space above the back rests of multiple rows of passenger seats, so that any other crew member and/or passenger can see freely through the passenger cabin.

Also additionally or alternatively, the skin can have at least one pocket. The at least one pocket can be arranged on an exterior side of the skin and/or on an interior side of the skin. This allows storage of personal belongings of the resting crew member, including digital devices, cloth, a book, a reading light, etc.. The pocket can be accessible from the exterior side as well as the interior side of the skin, so that a crew member can prepare the crew rest assembly before entering the interior space of the tent.

In another variant, the foldable mattress and the foldable tent can be configured to be folded into a compact shape, wherein the compact shape is dimensioned to fit into an aircraft trolley. For instance, the tent and mattress can be separated from one another and can be folded individually. The packing size of the mattress and tent is chosen, so that the mattress as well as the tent fits into a standard aircraft trolley. This can be a half size trolley with standardised dimensions of 103 cm x 30.1 cm x 40.5 cm (having internal storage dimensions of approximately 84.3 cm x 25.6 cm x 38.4 cm) or a full-size trolley with standardised dimensions of 103 cm x 30.5 cm x 81 cm (having internal storage dimensions of approximately 84.3 cm x 25.6 cm x 78 cm). This allows a very convenient storage and transport possibility of the crew rest assembly.

For instance, the packing size of the mattress and the tent can be based on the width of the mattress and tent when installed, such as 60 cm to 75 cm as noted above. The packing size of the mattress and the tent may then be 60 cm x 60 cm to 75 cm x 75 cm having a combined thickness of less than 25 cm, so that both together fit into a full-size trolley. It is to be understood, that the mattress may have more fold lines and the tent (particularly its frames) may have joints or bends, so that the mattress and the tent can be folded to a smaller package, which fits into a half size trolley.

It is to be understood that the packing size of the crew rest assembly also allows storage of the assembly in a cabinet or overhead storage bin. Specifically, if certain rows of passenger seats are not sold and can be used for crew rests, the associated storage bins are usually not occupied by luggage of other passengers and can be used for storing the crew rest assembly.

According to a second aspect to better understand the present disclosure, an aircraft trolley comprises at least one crew rest assembly according to the first aspect or one or more of its variants and/or examples.

In a variant, the aircraft trolley can further comprise at least one bag configured to hold a pillow, a blanket and/or personal items of a crew member. Thus, an aircraft trolley allows storing all items necessary for a crew member to install the crew rest assembly and to rest in the tent.

According to a third aspect to better understand the present disclosure, an aircraft comprises at least one monument, and at least one aircraft trolley according to the second aspect or its variant, wherein the aircraft trolley is parked in the at least one monument. The monument can be a galley, a (food storage) cabinet or the like that comprises one or more parking areas for trolleys. Thus, a crew rest assembly can easily be stored in the aircraft without blocking any bins or cabinets intended for passenger use. Moreover, the trolley can easily be moved from the monument to the row of passenger seats, where the crew rest assembly is installed, which facilitates transportation of the crew rest assembly through the aircraft in a single move.

In a variant, the aircraft can further comprise a plurality of seat rows configured to hold a crew rest assembly from the at least one aircraft trolley. In other words, each of the plurality of seat rows is configured to have the mattress of the assembly installed thereon, for example, the mattress is laid on top of the seat cushions of the seat row, the mattress is securely attached to the seats (e.g., with a seatbelt) and the tent is attached onto the mattress.

The present disclosure is not restricted to the aspects and variants in the described form and order. Specifically, the description of aspects and variants is not to be understood as a specific limiting grouping of features. It is to be understood that the present disclosure also covers combinations of the aspects and variants. Thus, each variant or optional feature can be combined with any other aspect, variant, optional feature or even combinations thereof.

In the following, the present disclosure will further be described with reference to exemplary implementations illustrated in the figures, in which:
- Figure 1: schematically illustrates a perspective view of a crew rest assembly;
- Figure 2: schematically illustrates a side view of a crew rest assembly installed on a row of passenger seats;
- Figure 3: schematically illustrates another perspective view of multiple crew rest assemblies;
- Figure 4: schematically illustrates a mattress and tent of a crew rest assembly;
- Figure 5: schematically illustrates details of a mattress;
- Figure 6: schematically illustrates different positions of a foldable mattress;
- Figure 7: schematically illustrates top and bottom views of a tent and a mattress;
- Figure 8: schematically illustrates details of fastening means of a mattress;
- Figure 9: schematically illustrates an aircraft monument and aircraft trolley for storing a crew rest assembly;
- Figure 10: schematically illustrates details of a crew rest assembly in case of an emergency;
- Figure 11: schematically illustrates further details of a crew rest assembly in case of an emergency; and
- Figure 12: schematically illustrates an aircraft.

In the following description, for purposes of explanation and not limitation, specific details are set forth in order to provide a thorough understanding of the present disclosure. It will be apparent to one skilled in the art that the present disclosure may be practiced in other implementations that depart from these specific details.

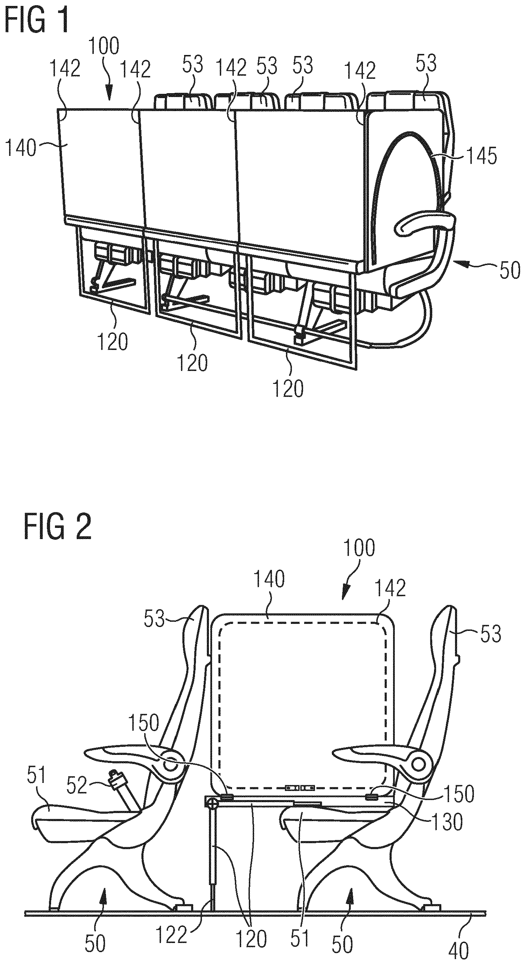

Figure 1 schematically illustrates a perspective view of a crew rest assembly 100 arranged on a plurality of passenger seats 53 forming a row of passenger seats 50, and Figure 2 schematically illustrates a side view of a crew rest assembly 100 installed on a row of passenger seats 50.

The crew rest assembly 100 comprises a foldable mattress 130 and a foldable tent 140 attached to the mattress 130 and sized to cover the mattress 130. The tent 140 may entirely cover the mattress 130, or (as illustrated in Figure 2) may be slightly smaller than the mattress 130. It is to be understood that the tent 140 may even be larger in at least one direction than the mattress 130. The crew rest assembly 100 is configured, so that the mattress 130 can be placed on the seat cushions 51 of the row of passenger seats 50.

Since the depths of the seat cushions 51 (in the longitudinal direction of the aircraft (left to right direction in Figure 2)) is less than the entire space between two rows of passenger seats 50 for leaving a leg space for the passengers, the mattress 130 can be made more comfortable by extending into this free leg space, as derivable from Figure 2. In other words, a width of the mattress 130 extends over the depths of the seat cushions 51. In order to have a stable crew rest 100, the mattress 130 has at least one leg 120 that can pivot from a storage position at a bottom of the mattress 130 into a deployed position (illustrated in Figures 1 and 2).

Figure 1 illustrates an assembly 100 having three legs 120, each of which has a U-shape, wherein the legs 120 are pivoted downwards into the deployed position. The at least one leg 120 is arranged along the row of passenger seats 50. As an example, the three legs 120 are arranged in one plane parallel to the spanning direction of the row of passenger seats 50, e.g. parallel to a front edge of the seat cushions 51 as well as parallel to the front surface of the back rests 53 of the passenger seats 50.

It is to be understood that the plurality of legs 120 may be arranged underneath the mattress 130 in more than one plane. With respect to Figure 2, other legs 120 may be arranged to the right of the illustrated leg 120, which provides additional stability and support for the mattress 130.

In order to properly support the mattress 130 in a horizontal position when lying on the seat cushions 51, the legs 120 can be provided with an extendable portion 122. This extendable portion 122 can vary the height (length) of the legs 120.

Figure 2 illustrates the leg 120 in the deployed position as well as in the stored position, where the leg 120 is arranged at the bottom of the mattress 130. Figure 2 shows the extendable portion 122 in an extended manner also in the stored position of the leg 120. It is to be understood that the extendable portion 122 may be brought into a position where the leg 120 has its shortest height (length), so that it requires the minimum space in the stored position at the mattress 130.

The crew rest assembly 100 comprises a tent 140, which is formed by a plurality of flexible frames 142 holding a skin 141. The tent 140 has, for example, a tunnel shape, that is mainly formed by the form of the frames 142. For instance, the frames 142 are arranged at an outer circumference of a cross-section of the tunnel shape, while the skin 141 is spun around (at an exterior side of) the frames 142. It is to be understood that the skin 141 can be attached to the frames 142, so that both together form a unit.

As a mere example, the tent 140 can comprise frames 142 arranged at each longitudinal end of the mattress 130 as well as one frame 142 arranged at each folding line of the mattress 130. This allows arranging the lower portion of the frame 142 in the folding line, e.g., a recess in the mattress 130, so that the lower portion of the frame 142 does not create discomfort for a person lying in the tent 140. It is to be understood that the mattress 130 may include a recess (not illustrated) at any position, even not forming a folding line, corresponding to the position of the frame 142 in the tent 140.

The tent 140 and/or the mattress 130 can comprise at least one attachment means 150 configured to connect the tent 140 to the mattress 130. Such attachment means 150 can include a hook-and-loop fastener and/or a snap fastener. These types of fasteners allow fast installation of the crew rest assembly 100 as well as a fast detachment of the tent 140 from the mattress 130.

Furthermore, the tent 140 can comprise a closable opening 145, through which a person can enter and leave an interior space of the tent 140. Although such opening 145 is illustrated at a longitudinal end of the tunnel (skin 141), it may be arranged at a lateral side and/or upper side and/or the longitudinal end of the tent 140.

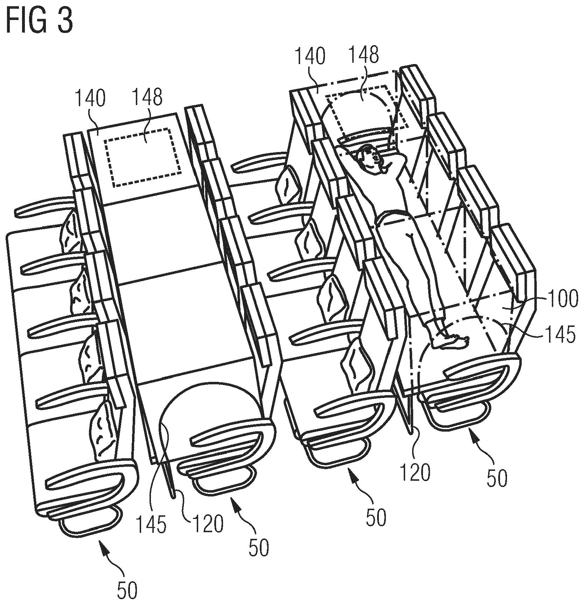

Figure 3 schematically illustrates another perspective view of multiple crew rest assemblies 100 in several rows of passenger seats 50. As a mere example, every second row of passenger seats 50 can be equipped with a crew rest assembly 100. In this perspective it is further derivable that a window 148 can be provided in an upper region of the tent 140. This allows a person lying in the tent 140 to look outside. Specifically, above the tent 140 there is usually a personal service unit (not illustrated) including information signs, such as a fasten seatbelt sign or the like. Such signs or other items can be viewed from the inside of the tent 140.

Such window 148 may be configured as a fabric that allows to look through only in one direction. For instance, a mesh-like fabric having a printed layer on the outside allows that a person lying inside of the tent 140 can look outside, while a person outside of the tent 140 cannot look inside. Such semi-transparent material for the skin 141 maintains privacy for the person inside of the tent 140. Instead of a window 148, the entire skin 141 can be made from the material that allows looking from the inside to the outside, but does not allow to look inside of the tent 140.

The skin 141 of the tent 140 can be made of any suitable material, such as a fabric, a foil, a membrane, or the like as well as combinations thereof. The material for the skin 141 can include cotton, wool, synthetic fibres, such as polyamide, polyester, or the like. For instance, the skin 141 can include a fine net that has been made opaque from at least one side.

Figures 1 to 3 illustrate that the skin 141 of the tent 140 has a size, so that the tunnel shape of the tent 140 has a height smaller or equal to a height of an upright backrest 53 of the row of passenger seats 50. In other words, and as particularly derivable from Figures 1 and 2, the upper portion of the tent 140 does not exceed the upper portions of the back rests 53 of the passenger seats 50. This allows an unhindered visibility of the aircraft passenger cabin, which is usually required during operation of an aircraft. For instance, a non-resting crew member can visually check the entire cabin, i.e. passengers sitting in the remaining seats 50.

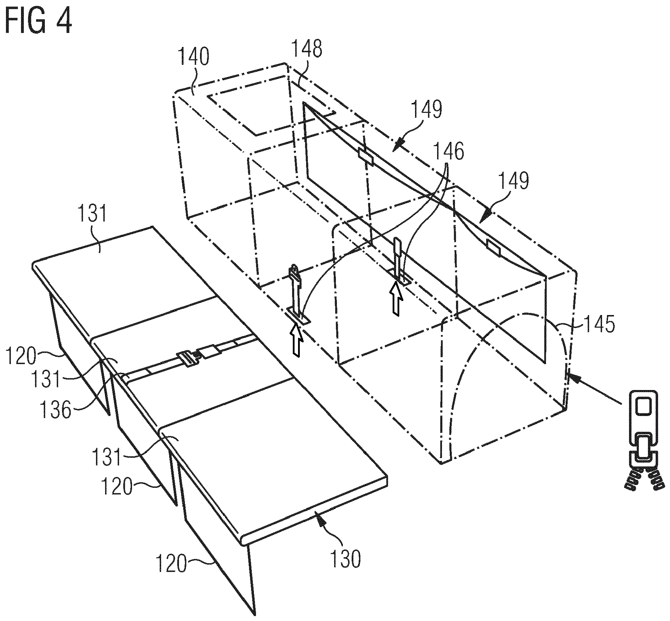

Figure 4 schematically illustrates a mattress 130 and tent 140 of a crew rest assembly 100 separated from one another. As can be derived from Figure 4, the mattress 130 is foldable along two fold lines, so that the mattress 130 comprises three sections 131. Each section 131 is equipped with a respective leg 120, so that each section 131 is supported in a vertical direction.

The mattress 130 can comprise a security belt 136 which allows a person lying on the mattress 130 to buckle up. In case the skin 141 of the tent 140 has a complete circumferential cross-section, the tent 140 may have an opening 146, through which the security belt 136 enters an interior space of the tent 140. The skin 141 of the tent can have a plurality of openings 146 corresponding to the number of portions of the security belt 136, so that each portion can be threaded through an associated opening 146. It may be sufficient that only one section 131 is equipped with the security belt 136, such as the middle section 131.

The tent 140 may further be equipped with at least one pocket 149, which allows storage of items when the crew rest assembly 100 is in use. For increased comfort, the skin 141 can be of a breathable material, i.e. air permeable material.

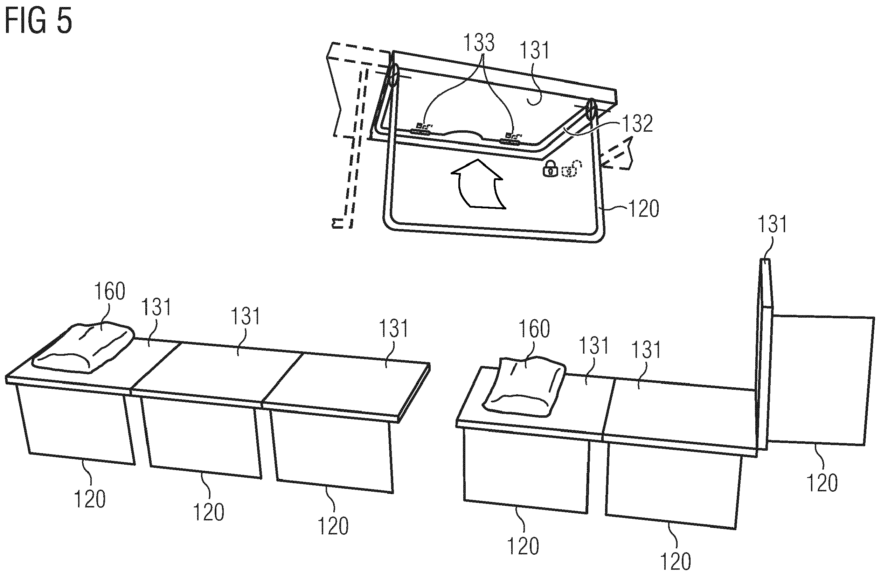

Figure 5 schematically illustrates details of a mattress 130. First of all, Figure 5 illustrates in the upper portion a bottom view of one section 131 of the mattress 130. The mattress 130 (on its bottom side) includes a recess 132 configured to receive the at least one leg 120. As illustrated in Figure 5, the leg 120 is pivotally mounted to the bottom side of the mattress 130 and can be rotated from the illustrated deployed position towards and into the recess 132, where the leg 120 is in its stored position. The recess 132 has a form corresponding to the leg 120 in its stored position. For easy access, the recess 132 may be widened in one area, in order to form a hollow to grip the leg 120. The mattress 130 can comprise a locking mechanism 133 holding the at least one leg 120 in the recess 132. This locking mechanism 133 can be a clip or latch or the like.

When the leg 120 is stored, the mattress 130 can easily be folded. Figure 5 illustrates the mattress 130 in an unfolded position (left portion of Figure 5) as well as in a position, where the right section 131 is folded upwards. It is to be understood that any section 131 of the mattress 130 may likewise be folded downwards with respect to an adjacent section 131.

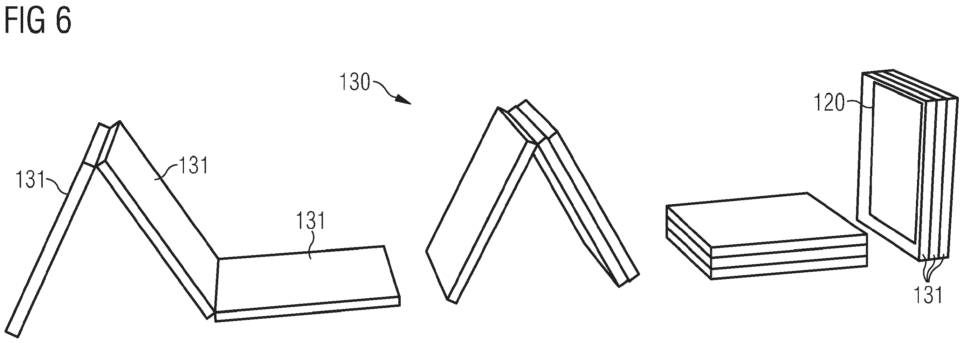

This is exemplarily illustrated in Figure 6 showing different positions of the foldable mattress 130. As is derivable, adjacent sections 131 of the mattress 130 may be connected to one another, i.e. provide a fold line, so that the sections 131 can be folded with their bottom sides falling together or with their upper sides falling together. The folding direction may change every section 131 of the mattress 130. This allows a minimised packing size of the mattress 130 as illustrated in the right part of Figure 6. In this folded state of the mattress 130, the legs 120 may be arranged inside respective recesses 132 of each section 131 of the mattress 130.

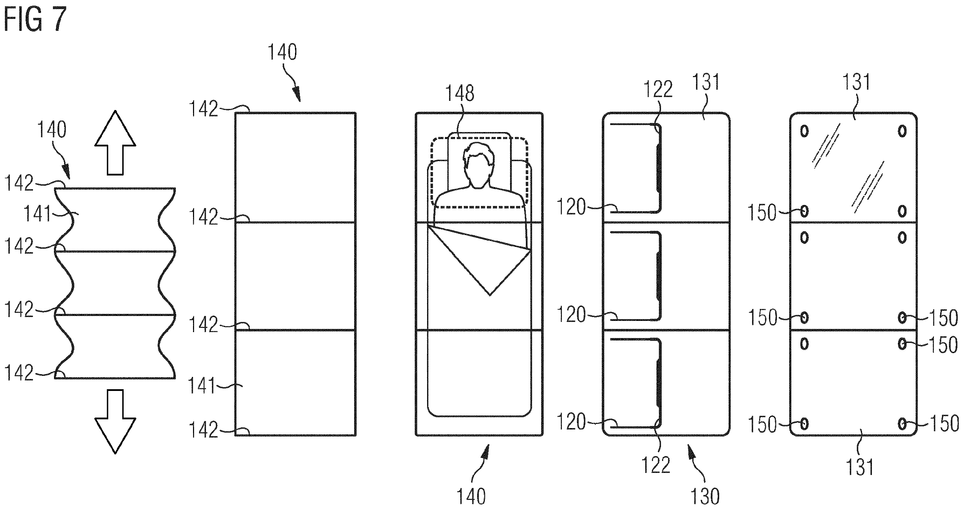

Figure 7 schematically illustrates top and bottom views of a tent 140 and a mattress 130. Specifically, to the left in Figure 7 a partially folded tent 140 is illustrated, where frames 142 are pulled away from one another. In other words, in a packed or folded configuration of the tent 140, the frames 142 lie close to each other. By pulling them apart, the skin 141 more and more takes the tunnel-shaped form until the skin 141 is fully stretched. In this configuration, the tent 140 can be attached to a mattress 130 to form the crew rest assembly 100.

For instance, as illustrated to the right in Figure 7, the mattress 130 and/or the tent 140 can comprise at least one attachment means 150, that allows mounting the tent 140 to the mattress 130. As a mere example, a plurality of attachment means 150, such as snap fasteners or hook-and-loop fasteners may be arranged at an upper side of the mattress 130 and corresponding positions of the skin 141 (particularly a lower side of the tent 140), so that the tent 140 can be laid on top of the mattress 130 and can be fixed in this position.

Figure 7 also illustrates (in a middle part of the drawing) an upper side of the tent 140 showing a window 148 as well as a bottom side of the mattress 130 including the legs 120 arranged in the stored position.

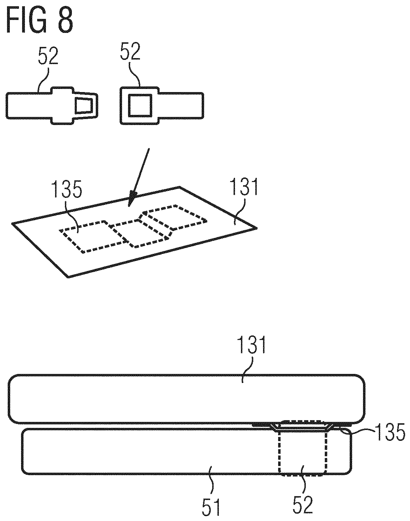

Figure 8 schematically illustrates details of fastening means 135 of a mattress 130. Such fastening means 135 are configured to be attached to a seatbelt 52 of a passenger seat 50 (see also Figure 2). For example, the fastening means 135 can be a loop or strap arranged at a bottom side of the mattress 130, through which the seatbelt 52 is threaded. After closing the seatbelt 52, the mattress 130 is securely fixed to the passenger seat 50, i.e. the mattress 130 is locked onto the seat cushion 51 of the passenger seat 50.

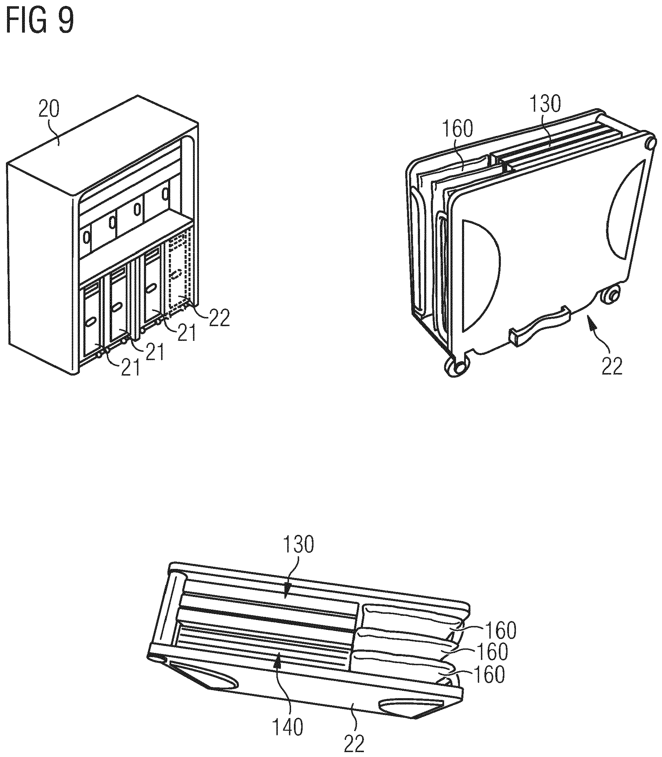

Figure 9 schematically illustrates an aircraft monument 20 and an aircraft trolley 22 for storing a crew rest assembly 100. As explained above, the mattress 130 and the tent 140 are foldable. This allows placing the folded mattress 130 and tent 140 into an aircraft trolley 22, such as a full-size trolley or half size trolley. Particularly when using a full-size trolley 22, additional items, such as pillows 160 can be stored in the trolley 22. Due to the standard size of the trolley 22, it can be stored in any monument 20 having storage or parking places for trolleys 22.

Such aircraft trolley 22 may be a normal trolley, which can also be used for storing trays or the like. Alternatively, a special trolley 22 for storing a crew rest assembly 100 can be employed, as illustrated in Figure 9. This special trolley 22 can have an opening on its upper side, so that the mattress 130 and tent 140 can easily be removed from and stored in the trolley 22.

As a mere example, the monument 20 can be a galley comprising regular trolleys 21 for storing food or dishes, while one position is occupied by the special trolley 22 holding the folded crew rest assembly 100.

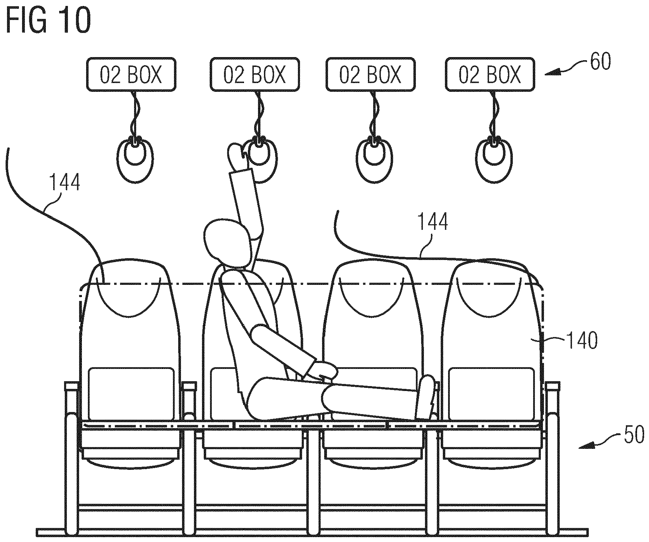

Figure 10 schematically illustrates details of a crew rest assembly 100 in case of an emergency. If a crew member rests in the tent 140 and an emergency situation occurs where oxygen masks 60 fall out of a personal service unit above the passenger seats 50, the tent 140 provides a possibility for the crew member to reach such oxygen mask 60. For instance, an upper portion 144 of the skin 141 can be releasably attached to a remainder of the skin 141 (a remainder of the tent 140). This releasable attachment can be achieved by hook-and-loop fasteners and/or snap fasteners and/or a zipper, which allows the crew member to remove the upper portion 144 of the skin 141 in a fast manner. In case of hook-and-loop or snap fasteners, the crew member may simply sit up and reach through the upper portion 144, thereby opening the fasteners.

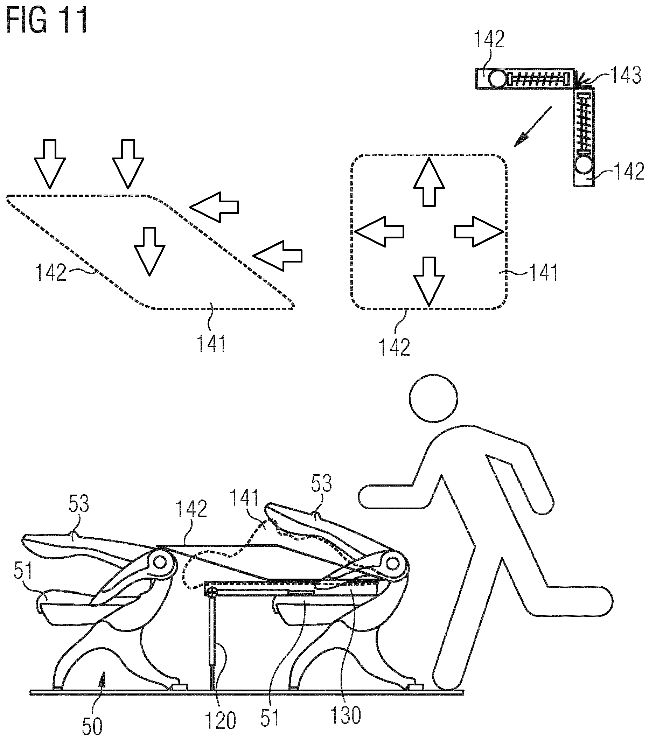

Figure 11 schematically illustrates further details of a crew rest assembly 100 in case of an emergency. The frames 142 of the tent 140 can be made of a flexible material, such as an elastic plastic, fibre reinforced plastic, elastic metal, or the like as well as a combination thereof. In addition, each frame 142 can include at least one biasing element 143. For instance, such biasing element 143 can connect two sections of a frame 142 to one another. The biasing element 143 may be configured to force the flexible frame 142 in a predefined position, such as a position where the frame 142 forms the cross-sectional shape of the tunnel shape of the tent 140.

In case of an emergency, in order to free space in the passenger cabin, some passenger seats 50 may be configured in such a manner that the back rest 53 can be folded downwards, i.e. onto the seat cushion 51. If a crew rest assembly 100 is provided on such passenger seats 50, the flexible frames and/or the at least one biasing element 143 do not hinder the folding down of the back rest 53. In addition, since the tent 140 mainly consists of a skin 141 the crew rest assembly 100 does not block the back rest 53 from being folded down.

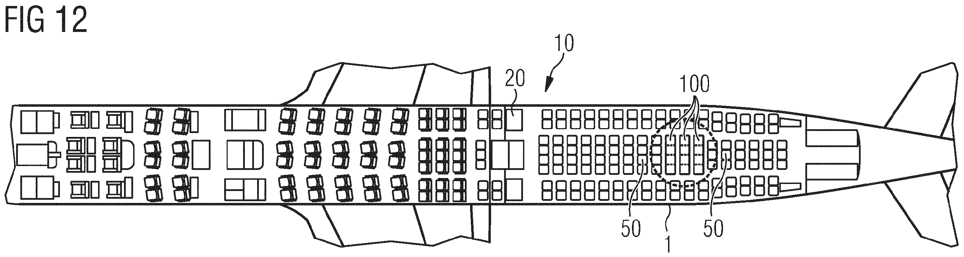

Figure 12 schematically illustrates an aircraft 1. The aircraft 1, particularly its passenger cabin 10, can be equipped with a plurality of passenger seats 50. As illustrated in Figure 12, a plurality of seat rows 50 are arranged in the passenger cabin 10. At least some of these seat rows 50 can be equipped with a crew rest assembly 100 (Figure 12 illustrates three crew rest assemblies 100). If not in use, the crew rest assemblies 100 can be stored in a monument 20, for example, in a trolley 22 stored in the monument 20.

It is believed that the advantages of the technique presented herein will be fully understood from the foregoing description, and it will be apparent that various changes may be made in the form, constructions and arrangement of the exemplary aspects thereof without departing from the scope of the disclosure or without sacrificing all of its advantageous effects. Because the technique presented herein can be varied in many ways, it will be recognized that the disclosure should be limited only by the scope of the claims that follow.

## Claims

1. A crew rest assembly (100) deployable on a row of passenger seats (50) of an aircraft (1), the assembly comprising:
a foldable mattress (130); and
a foldable tent (140) configured to be attached to the mattress (130) and sized to cover the mattress (130),
**characterized in that**
the mattress (130) is configured to be placed on seat cushions (51) of the row of passenger seats (50), and has at least one leg (120) that can pivot from a stored position at a bottom of the mattress (130) into a deployed position, in which the at least one leg (120) is arranged along the row of passenger seats (50).

2. The assembly of claim 1, wherein the mattress (130) comprises at least one fastening means (135) configured to be attached to a seatbelt (52) of at least one passenger seat (50) of the row of passenger seats (50).

3. The assembly of claim 1 or 2, further comprising:
a security belt (136),
wherein, preferably, the security belt (136) is connected to the mattress (130), and the tent (140) comprises an opening (146), through which the security belt (136) enters an interior space of the tent (140).

4. The assembly of one of claims 1 to 3, wherein the mattress (130) includes a recess (132) configured to receive the at least one leg (120), and
wherein, preferably, the mattress (130) comprises a locking mechanism (133) holding the at least one leg (120) in the recess (132).

5. The assembly of one of claims 1 to 4, wherein the at least one leg (120) comprises an extendable portion (122).

6. The assembly of one of claims 1 to 5, wherein the mattress (130) comprises at least one attachment means (150) configured to be connected to the tent (140), and
wherein, preferably, the at least one attachment means (150) includes a hook-and-loop fastener and/or a snap fastener

7. The assembly of one of claims 1 to 6, wherein the tent (140) comprises a plurality of flexible frames (142) holding a skin (141) in a tunnel shape, and
wherein, preferably, the skin (141) is tunnel-shaped and each of the frames (142) is arranged at the outer circumference of a cross-section of the tunnel shape.

8. The assembly of claim 7, wherein each of the plurality of flexible frames (142) includes at least one biasing element (143) forcing the respective flexible frame (142) in a position forming the tunnel shape.

9. The assembly of claim 7 or 8, wherein the skin (141)
comprises at least one portion (148), which is partially transparent from an interior space of the tent (140) to an exterior space of the tent (140), and/or
is of a breathable material, and/or
has a closable opening (145), through which a person can enter and leave an interior space of the tent (140), and/or
has at least one upper portion (144) that is releasably attached to a remainder of the tent (140), and/or
has at least one pocket (149), and/or
has a size, so that the tunnel shape has a height smaller or equal to a height of an upright back rest (53) of the row of passenger seats (50).

10. The assembly of one of claims 1 to 9, wherein the foldable mattress (130) and the foldable tent (140) are configured to be folded into a compact shape, and wherein the compact shape is dimensioned to fit into an aircraft trolley (22).

11. An aircraft trolley (22) comprising at least one crew rest assembly (100) according to 1 of claims 1 to 10.

12. The aircraft trolley of claim 11, further comprising:
at least one bag (160) configured to hold a pillow, a blanket and/or personal items of a crew member.

13. An aircraft (1), comprising:
at least one monument (20); and
at least one aircraft trolley (22) according to claim 11 or 12 parked in the at least one monument (20).

14. The aircraft of claim 13, further comprising:
a plurality of seat rows (50) configured to hold a crew rest assembly (100) from the at least one aircraft trolley (200).
